# EUROPÄISCHE PATENTANMELDUNG

(11) **EP 2 196 280 A2**
(43) Veröffentlichungstag der Anmeldung: **16.06.2010**
(21) Anmeldenummer: 09015239.8
(22) Anmeldetag: 09.12.2009
(51) Int. Cl.: B23P 11/02, F16B 4/00

(54) **Verfahren und Vorrichtung zum Zusammenfügen von Bauteilen**

(30) Priorität: 11.12.2008 DE 102008061826
(71) Anmelder: Robert Bosch GmbH, 70469 Stuttgart (DE)
(72) Erfinder: Kübert, Torsten, 97816 Lohr (DE); Stohl, Axel, 97084 Würzburg (DE); Hanauer, Emil, 97355 Abtswind (DE); Schnurr, Bernd, 97816 Lohr (DE)
(74) Vertreter: Thürer, Andreas

(57) **Zusammenfassung**

Ein Verfahren zum Zusammenfügen von Bauteilen (2, 4), wobei ein Abschnitt (12) des ersten Bauteils in einen Abschnitt (14) des zweiten Bauteils durch eine Bewegung eines Bauteils (2, 4) gegenüber dem anderen Bauteil (4, 2) in einer vorgegebenen Bewegungsrichtung (B) eingefügt wird und wobei wenigstens eines der beiden Bauteile (2, 4) vor dem Fügevorgang temperiert wird. Erfindungsgemäß wird an dem ersten Bauteil (2) ein erster Führungskörper (6) angeordnet und/oder an dem zweiten Bauteil (4) ein zweiter Führungskörper (8) angeordnet, wobei diese Führungskörper (6, 8) derart an den Bauteilen angeordnet werden, dass die Führungskörper (6, 8) während des Fügevorgangs ihr Führungsteil berühren, bevor sich die Bauteile (4, 2) oder deren Fügeflächen (12, 14) berühren.

## Beschreibung

Die vorliegende Erfindung bezieht sich auf ein Verfahren und eine Vorrichtung zum Zusammenfügen von Bauteilen. Die vorliegende Erfindung kann dabei Anwendung finden auf das Zusammenfügen im Bereich von Servozylindern, es wird jedoch darauf hingewiesen, dass die vorliegende Erfindung auch auf andere Bauteile, welche zusammengefügt werden stollen, Anwendung finden kann. Aus dem Stand der Technik ist es bekannt, Bauteile dadurch ineinander zu fügen, dass das äußere der zusammenzufügenden Bauteile erwärmt wird und/oder das innere unterkühlt und anschließend mit dem anderen Bauteil zusammengefügt wird. Durch die höhere Temperatur erweitert sich der Querschnitt des äußeren Teiles gegenüber dem inneren Teil, und nach dem Einfügen des inneren Bauteils ergibt sich ein Halt zwischen diesen beiden Bauteilen nach dem Temperaturausgleich.

Dabei besteht jedoch das Problem, dass sich die beiden zusammenzufügenden Bauteile schon berühren, noch bevor sich die beiden Bauteile über die Fügeflächen gegeneinander ausrichten. In Folge dieser Berührung kommt es zu einem Temperaturausgleich zwischen den beiden Bauteilen, wodurch sich beispielsweise das erwärmte Bauteil schnell abkühlt. Auf diese Weise wird der Vorgang zeitlich höchst problematisch. Die Teile müssen zueinander ausgerichtet und gefügt werden, bevor der Temperaturausgleich soweit fortschreitet, dass die Teile zueinander festsitzen.

Der vorliegenden Erfindung liegt daher die Aufgabe zugrunde, ein Verfahren und eine Vorrichtung zur Verfügung zu stellen, welche ein passgenaues Fügen von Bauteilen bei einem thermisch gestützten Fügevorgang ermöglichen.

Dies wird erfindungsgemäß durch die unabhängigen Vorrichtungs- und Verfahrensansprüche erreicht. Vorteilhafte Ausführungsformen und Weiterbildungen sind Gegenstand der Unteransprüche.

Bei einem erfindungsgemäßen Verfahren zum Zusammenfügen von Bauteilen wird ein Abschnitt, beispielsweise ein Endabschnitt, des ersten Bauteils in einen Abschnitt, beispielsweise einen Endabschnitt, eines zweiten Bauteils durch eine Bewegung eines Bauteils gegenüber dem anderen Bauteil in einer vorgegebenen Bewegungsrichtung eingefügt. Dabei wird wenigstens eines der beiden Bauteile vor dem Fügevorgang temperiert.

Erfindungsgemäß wird wenigstens an dem ersten Bauteil ein erster Führungskörper oder an dem zweiten Bauteil ein zweiter Führungskörper angeordnet, wobei dieser Führungskörper derart an den Bauteilen angeordnet wird, dass wenigstens ein Führungskörper während des Fügevorgangs eine Führungsfläche berührt, bevor sich die Bauteile berühren. Auf diese Weise wird insbesondere bewirkt, dass die Bauteile gegeneinander geführt werden, bevor sie sich gegenseitig berühren.

Bevorzugt wird an jedem Bauteil ein Führungskörper vorgesehen und die beiden Führungskörper berühren sich während des Fügevorgangs, bevor sich die Bauteile berühren. Dies bedeutet, dass bereits die beiden Bauteile gegeneinander geführt bzw. in gewünschter Weise positioniert werden, noch bevor sie sich gegenseitig berühren. Anders ausgedrückt werden dabei verfahrensseitig die beiden Bauteile in ihrer Bewegung einander gegenüber geführt, bevor es zu einem tatsächlichen Kontakt der beiden Bauteile miteinander kommt. Auf diese Weise wird ein passgenaues Fügen des einen Bauteils an das andere Bauteil ermöglicht.

Bevorzugt wird beim Fügevorgang ein Führungskörper von einer Führungsfläche geführt, bevor sich die Fügeflächen berühren.

Bei einem bevorzugten Verfahren wird ein Führungskörper von dem anderen Führungskörper geführt, bevor sich die Bauteile berühren. Dabei ist bevorzugt je ein Führungskörper an einem der beiden Bauteile fest angeordnet, so dass durch eine Führung der Führungskörper gegeneinander auch die Bauteile gegeneinander geführt werden.

Bei einem weiteren vorteilhaften Verfahren ist der erste Führungskörper während des Fügevorgangs an bzw. in dem ersten Bauteil angeordnet. Weiterhin ist bevorzugt der zweite Führungskörper während des Fügevorgangs fest an oder in diesem zweiten Bauteil angeordnet.

Bei einem weiteren bevorzugten Verfahren wird wenigstens einer der Führungskörper vor dem Fügevorgang temperiert. So ist es beispielsweise möglich, dass der erste Führungskörper in das erste Bauteil eingeführt wird und anschließend temperiert bzw. erwärmt wird und mit diesem Führungskörper auch das erste Bauteil erwärmt wird und dadurch schrumpft oder sich ausdehnt. Es wäre jedoch auch möglich, den zweiten Führungskörper zu temperieren, beispielsweise abzukühlen. Dies könnte beispielsweise durch eine Beaufschlagung mit flüssigem Stickstoff oder dergleichen erfolgen.

Bei einer weiteren vorteilhaften Ausführungsform weist der erste Führungskörper einen Führungsvorsprung auf, der in eine Führungsausnehmung des zweiten Führungskörpers während des Fügevorgangs eingreift. Dabei kann es sich beispielsweise bei dem Führungsvorsprung um eine sich in der oben genannten Bewegungsrichtung erstreckende Stange handeln, welche in einen entsprechend ausgebildeten Hohlraum des zweiten Führungskörpers eingreift. Durch diese Kombination wird eine (geführte) Bewegung der beiden Führungskörper und damit auch der Bauteile gegeneinander in der Bewegungsrichtung möglich, Verschiebungen in anderen Richtungen insbesondere senkrecht zu dieser Bewegungsrichtung werden jedoch weitgehend verhindert.

Bei einem weiteren bevorzugten Verfahren werden die Fügeflächen der Bauteile miteinander verklebt. So ist es möglich, vor dem Fügevorgang an wenigstens einem der beiden Abschnitte einen Klebstoff aufzutragen, der die anschließend entstehende Verbindung zwischen den beiden Bauteilen stärkt.

Bei einem weiteren bevorzugten Verfahren wird der erste Führungskörper in das erste Bauteil eingeschoben. So ist es möglich, den ersten Führungskörper in einen Hohlraum des Bauteils einzufügen und anschließend zu erwärmen. Durch diese Erwärmung dieses ersten Führungskörpers dehnt sich zunächst der Führungskörper selbst aus, was dazu führt, dass er anschließend fest bzw. passgenau in dem ersten Bauteil angeordnet ist. Durch einen entsprechenden Wärmeübertrag dehnt sich anschließend auch das erste Bauteil aus und anschließend kann der Fügevorgang eingeleitet werden.

Bei einem weiteren vorteilhaften Verfahren wird das zweite Bauteil zwischen dem zweiten Führungskörper und einer Halterung angeordnet. So ist es beispielsweise möglich, dass der zweite Führungskörper mit der Halterung verschraubt wird und zwischen der Halterung und dem zweiten Führungskörper das zweite Bauteil bzw. ein Bereich des zweiten Bauteils angeordnet wird.

Die vorliegende Erfindung bezieht sich weiterhin auf ein Werkzeug zum Zusammenfügen von Bauteilen, wobei ein Abschnitt des ersten Bauteils in einen Abschnitt des zweiten Bauteils durch eine Bewegung eines Bauteils gegenüber einem anderen Bauteil in einer vorgegebenen Bewegungsrichtung einfügbar ist. Erfindungsgemäß weist das Werkzeug einen mit einem der beiden Bauteile während eines Fügevorgangs vorübergehend verbindbaren ersten Führungskörper auf, der derart gestaltet ist, dass das andere Bauteil während einer Bewegung der Bauteile gegeneinander durch diesen Führungskörper zumindest mittelbar geführt wird, bevor sich die beiden Bauteile berühren. Auch durch die erfindungsgemäße Vorrichtung wird auf diese Weise ein passgenaues Fügen der Bauteile erreicht.

In einer bevorzugten Ausführungsform weist das Werkzeug einen zweiten Führungskörper auf, der mit dem anderen Bauteil während des Fügevorgangs verbindbar ist und derart gestaltet ist, dass sich die beiden Führungskörper während des Fügevorgangs berühren, bevor sich die Bauteile berühren.

Bei einer weiteren bevorzugten Ausführungsform weist der erste Führungskörper einen Führungsvorsprung auf, der in eine auf diesen Führungsvorsprung angepasste Führungsausnehmung des zweiten Führungskörpers einschiebbar ist. Dabei greift dieser Führungsvorsprung in die Führungsausnehmung ein, bevor sich die beiden Bauteile berühren.

Bei einer weiteren vorteilhaften Ausführungsform ist der erste Führungskörper in einen von dem ersten Bauteil ausgebildeten Hohlraum einschiebbar. Durch dieses Einschieben und anschließendes Erwärmen wird, wie oben erwähnt, ein fester Halt zwischen dem ersten Führungskörper und dem ersten Bauteil erreicht.

Bei einer weiteren vorteilhaften Ausführungsform weist das Werkzeug eine Halterung auf, wobei das zweite Bauteil zwischen dieser Halterung und dem zweiten Führungskörper aufnehmbar ist. Damit wird bevorzugt die Verbindung zwischen dem zweiten Bauteil und dem zweiten Führungskörper nicht durch ein Temperieren geschaffen, sondern durch ein Einschrauben bzw. durch das Bilden einer kraft- und ggf. auch formschlüssigen Verbindung zwischen der Halterung und den zweiten Führungskörper und damit auch dem zweiten Bauteil.

Bevorzugt ist wenigstens einer der Führungskörper temperierbar, d. h. ggf. erwärmbar oder auch abkühlbar.

Durch die erfindungsgemäße Vorrichtung können auch zwei Teile unterschiedlicher Temperatur passgenau in einem Schrumpfklebearbeitsgang miteinander verbunden werden.

Bei einer weiteren vorteilhaften Ausführungsform ist wenigstens ein Führungskörper aus einem Material gefertigt, welches einen anderen Wärmeausdehnungskoeffizienten aufweist, als das Material eines oder der beiden Bauteile. Genauer gesagt kann wenigstens ein Führungskörper gegenüber den zu schrumpfenden Werkstücken aus einem Material anderer Wärmeausdehnung angefertigt sein, damit die Bauteile bzw. Werkstücke während des Arbeitsganges durch Schrumpf aus den Fügetemperaturen festgehalten und noch besser geführt werden. Weiterhin können die Führungskörper auch als Wärmespeicher für insbesondere dünnwandige Bauteile dienen, die ansonsten zu schnell abkühlen.

Bei einer weiteren bevorzugten Ausführungsform weist der erste Führungskörper einen Führungsvorsprung mit einer angepassten Kontur, der in eine auf diesen Führungsvorsprung angepasste Führungsausnehmung des zweiten Führungskörpers einschiebbar ist auf, und durch die besondere Kontur wird eine Verdrehung der beiden Fügeteile gegeneinander verhindert. Bei dieser angepassten Kontur kann es sich beispielsweise um Nut/Feder-Kombinationen handeln oder um aufeinander angepasste Querschnitte.

Weiterhin wäre es auch möglich, dass ein Führungskörper eine Nut bzw. eine Ausnehmung aufweist, die sich in der Bewegungsrichtung erstreckt und der zweite Führungskörper einen entsprechenden Vorsprung, der sich ebenfalls in dieser Bewegungsrichtung erstreckt. Auf diese Weise kann auch eine genaue Drehstellung zwischen den beiden Führungskörpern und damit auch zwischen den beiden Bauteilen erreicht werden.

Weitere Vorteile und Ausführungsformen ergeben sich aus den beigefügten Zeichnungen:

Dabei zeigt:

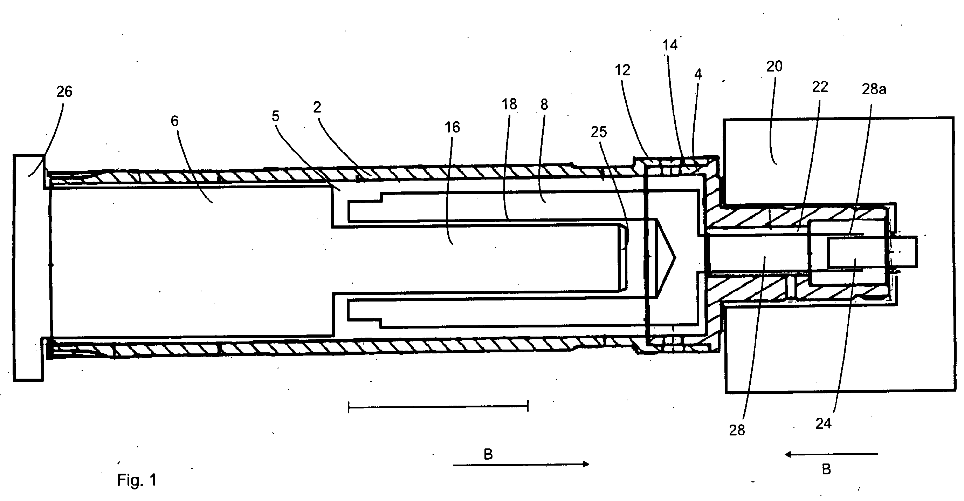

- Fig. 1: eine schematische Darstellung einer erfindungsgemäßen Vorrichtung.

In Fig. 1 ist ein erstes Bauteil 2 dargestellt welches in seinem Inneren einen Hohlraum 5 aufweist und welches mit einem zweiten Bauteil 4 zusammengefügt werden soll. Zu diesem Zweck weist das erste Bauteil 2 einen ersten Abschnitt 12 auf, in den bzw. innerhalb dessen Innenumfangs ein zweiter Abschnitt 14 des zweiten Bauteils 4 eingefügt werden soll. Bei diesem Zusammenfügen wird ein Bauteil gegenüber dem anderen Bauteil in der Bewegungsrichtung B auf dieses zubewegt.

Bereits vor dem eigentlichen Fügevorgang wird in das erste Bauteil 2 ein erster Führungskörper 6 eingeschoben. Dieser erste Führungskörper 6 weist dabei einen stangenartigen Vorsprung 16 auf, an dessen Ende eine Einführschräge 25 angeordnet ist. Weiterhin wird an einem zweiten Bauteil 4 ein zweiter Führungskörper 8 angeordnet. Dabei ist es möglich, dass dieser Führungskörper 8 mit einem Verbindungsabschnitt 28 in eine entsprechende Ausnehmung 22 des zweiten Bauteils 4 hineinragt und über seine Endabschnitte 28a beispielsweise mittels einer Schraubverbindung 24 mit der Halterung 20 bzw. einen Führungsstift 24 dieser Halterung 20 verbunden ist.

Man erkennt, dass bei einem Zusammenfügen der beiden Bauteile 2 und 4 der Vorsprung 16 bereits in etwa um den Bereich D in die Ausnehmung 18 eingeschoben ist und in diesem Bereich D bereits die Führungskörper 6 und 8 gegeneinander geführt sind bevor sich die Fügeteile 2 und 4 berühren. In der Realität wird in der Umfangsrichtung des Vorsprungs 16 der Spalt zwischen dem Vorsprung 16 und der Ausnehmung 18 deutlich geringer sein als in Fig. 1 dargestellt. Es wäre auch möglich, dass ein Schmiermittel, Gleitmittel, eine Kugel-oder eine Rollenführung oder ähnliches verwendet wird, um den Vorsprung 16 in die Ausnehmung 18 leichter einzuschieben.

Das Bezugszeichen 26 bezieht sich auf ein Anschlagelement, mit dem erreicht wird, dass der erste Führungsteil 6 nur und genau bis zu einem bestimmten Bereich in das erste Bauteil 2 einschiebbar ist. Nachdem bei einem Einfügeverfahren der erste Führungskörper 6 in das erste Bauteil 2 eingeschoben ist, kann er erwärmt werden, und insbesondere falls das Material des ersten Führungskörpers 6 einen höheren Wärmeausdehnungskoeffizienten aufweist als das Bauteil 2, wird auf diese Weise ein fester Halt des ersten Führungskörpers 6 in dem Bauteil 2 erreicht. Nach dem Fügevorgang kühlt der erste Führungskörper 6 wieder ab und kann anschließend aus dem ersten Bauteil herausgezogen werden. Der Führungskörper 18 kann von der Halterung 20 gelöst werden und ebenfalls in Fig. 1 nach links aus den beiden Bauteilen herausgezogen werden. Die Halterung 20 kann ebenfalls nach Lösen von dem zweiten Führungskörper 8 abgenommen werden.

Das erfindungsgemäße Verfahren ist auch nur mit einem einzigen Führungsteil möglich. Wenn der Vorsprung 16 des ersten Führungskörpers 6 soweit verlängert wird, dass er sich mit der Kontur des Verbindungsabschnittes 28 deckt und auch noch etwas länger ist, so wird beim Fügen der Führungskörper 6 mit dem Fügeteil 2 in der Ausnehmung 22 des Fügeteiles 4 geführt, bevor sich die Fügeflächen 12 und 14 berühren. Dann muss nur der Fügevorgang abgeschlossen sein, bevor die Wärme vom Führungskörper 6 über die Ausnehmung 22 in das Fügeteil 4 und weiter zur Fügefläche 14 geflossen ist. Damit wird das Führungsteil 8 eingespart aber auch nur eine kleinere Verlängerung der technisch möglichen Fügezeit gegenüber der Verwendung keines einzigen Führungsteiles erreicht.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 2: erstes Bauteil
- 4: zweites Bauteil
- 6, 8: Führungskörper
- 12, 14: Fügeabschnitt
- 16: Vorsprung
- 18: Ausnehmung
- 20: Halterung
- 22: Ausnehmung
- 24: Führungsstift oder Schraube
- 25: Einführschräge
- 26: Anschlagelement
- 28: Verbindungsabschnitt
- 28a: Endabschnitt

- D: Bereich
- B: Bewegungsrichtungen

## Patentansprüche

1. Verfahren zum Zusammenfügen von Bauteilen (2, 4), wobei ein Abschnitt (12) des ersten Bauteils in einen Abschnitt (14) des zweiten Bauteils durch eine Bewegung eines Bauteils (2, 4) gegenüber dem anderen Bauteil (4, 2) in einer vorgegebenen Bewegungsrichtung (B) eingefügt wird und wobei wenigstens eines der beiden Bauteile (2, 4) vor dem Fügevorgang temperiert wird,
**dadurch gekennzeichnet, dass**
wenigstens an dem ersten Bauteil (2) ein erster Führungskörper (6) oder an dem zweiten Bauteil (4) ein zweiter Führungskörper (8) angeordnet wird, wobei dieser Führungskörper (6, 8) derart an den Bauteilen angeordnet wird, dass wenigstens ein Führungskörper (6, 8) während des Fügevorgangs eine Führungsfläche (18, 22, 16) berührt, bevor sich die Bauteile (4, 2) berühren.

2. Verfahren nach Anspruch 1,
**dadurch gekennzeichnet, dass**
beim Fügevorgang ein Führungskörper (6, 8) von dem anderen Führungskörper (8, 6) geführt wird, bevor sich die Bauteile (4, 2) berühren.

3. Verfahren nach Anspruch 1,
**dadurch gekennzeichnet, dass**
beim Fügevorgang ein Führungskörper (6) von einer Führungsfläche (22) geführt wird, bevor sich die Fügeflächen (12, 14) berühren.

4. Verfahren nach wenigstens einem der vorangegangenen Ansprüche,
**dadurch gekennzeichnet, dass**
der erste Führungskörper (6) während des Fügevorgangs fest an dem ersten Bauteil (2) angeordnet ist.

5. Verfahren nach wenigstens einem der vorangegangenen Ansprüche,
**dadurch gekennzeichnet, dass**
der zweite Führungskörper (8) während des Fügevorgangs fest an dem zweiten Bauteil (4) angeordnet ist.

6. Verfahren nach wenigstens einem der vorangegangenen Ansprüche,
**dadurch gekennzeichnet, dass**
wenigstens einer der Führungskörper vor dem Fügevorgang temperiert wird.

7. Verfahren nach Anspruch 1,
**dadurch gekennzeichnet, dass**
der erste Führungskörper (6) einen Führungsvorsprung (16) aufweist, der in eine Führungsausnehmung (18) des zweiten Führungskörpers (8) während des Fügevorgangs eingreift.

8. Verfahren nach wenigstens einem der vorangegangenen Ansprüche,
**dadurch gekennzeichnet, dass**
die Fügezonen (12, 14) der Bauteile (2, 4) miteinander verklebt werden.

9. Verfahren nach wenigstens einem der vorangegangenen Ansprüche,
**dadurch gekennzeichnet, dass**
der erste Führungskörper (6) in das erste Bauteil (2) eingeschoben wird.

10. Verfahren nach wenigstens einem der vorangegangenen Ansprüche,
**dadurch gekennzeichnet, dass**
das zweite Bauteil (4) zwischen dem zweiten Führungskörper (8) und einer Halterung (20) angeordnet wird.

11. Werkzeug zum Zusammenfügen von Bauteilen, wobei ein Abschnitt (12) des ersten Bauteils in einen Abschnitt (14) des zweiten Bauteils durch eine Bewegung eines Bauteils (2, 4) gegenüber dem anderen Bauteil (4, 2) in einer vorgegebenen Bewegungsrichtung (B) einfügbar ist,
**dadurch gekennzeichnet, dass**
das Werkzeug einen mit einem der beiden Bauteile (2, 4) während eines Fügevorgangs vorübergehend verbindbaren ersten Führungskörper aufweist, der derart gestaltet ist, dass das andere Bauteil (4, 2) während einer Bewegung der Bauteile gegenüber einander durch diesen ersten Führungskörper (6) geführt wird, bevor sich die beiden Bauteile (2, 4) berühren.

12. Werkzeug (1) nach Anspruch 11,
**dadurch gekennzeichnet, dass**
das Werkzeug (1) einen zweiten Führungskörper (8) aufweist, der mit dem anderen Bauteil (4, 2) während des Fügevorgangs verbindbar ist und der derart gestaltet ist, dass sich die beiden Führungskörper (6, 8) während des Fügevorgangs berühren, bevor sich die Bauteile (4, 2) berühren.

13. Werkzeug (1) nach wenigstens einem der vorangegangenen Ansprüche 11-12,
**dadurch gekennzeichnet, dass**
der erste Führungskörper (6) einen Führungsvorsprung (16) aufweist, der in eine auf diesen Führungsvorsprung (16) angepasste Führungsausnehmung (18) des zweiten Führungskörpers (8) einschiebbar ist.

14. Werkzeug (1) nach wenigstens einem der vorangegangenen Ansprüche 11-13,
**dadurch gekennzeichnet, dass**
der erste Führungskörper (6) einen Führungsvorsprung (16) mit einer angepassten Kontur, der in eine auf diesen Führungsvorsprung (16) angepasste Führungsausnehmung (18) des zweiten Führungskörpers (8) einschiebbar ist und durch die besondere Kontur eine Verdrehung der beiden Fügeteile (2, 4) gegeneinander verhindert wird.

15. Werkzeug (1) nach wenigstens einem der vorangegangenen Ansprüche 11-14,
**dadurch gekennzeichnet, dass**
der erste Führungskörper in einen von dem ersten Bauteil (2) ausgebildeten Hohlraum (5) einschiebbar ist.

16. Werkzeug (1) nach wenigstens einem der vorangegangenen Ansprüche 11-15,
**dadurch gekennzeichnet, dass**
das Werkzeug eine Halterung (20) aufweist, wobei das zweite Bauteil (4) zwischen der Halterung (20) und dem zweiten Führungskörper (8) aufnehmbar ist.

17. Werkzeug (1) nach wenigstens einem der vorangegangenen Ansprüche 11-16,
**dadurch gekennzeichnet, dass**
wenigstens ein Führungskörper temperierbar ist.

18. Werkzeug (1) nach wenigstens einem der vorangegangenen Ansprüche 11-17,
**dadurch gekennzeichnet, dass**
wenigstens ein Führungskörper (6, 8) aus einem Material gefertigt ist, welches einen anderen Wärmeausdehnungskoeffizienten aufweist als das Material der Bauteile.
